# EUROPEAN PATENT APPLICATION

(11) **EP 4 563 814 A1**
(43) Date of publication of application: **04.06.2025**
(21) Application number: 22952957.3
(22) Date of filing: 28.07.2022
(51) Int. Cl.: F03D 13/25, B63B 35/44

(54) **SEMI-SUBMERSIBLE PLATFORM FOR SUPPORTING WIND TURBINES**

(71) Applicant: Dragados, S.A., 28050 Madrid (ES)
(72) Inventor: VAZQUEZ ROMERO, Miguel, 28050 MADRID (ES); FREIRE BERMUDEZ, Laura, 28050 MADRID (ES); GONZALEZ PATIÑO, Noelia, 28050 MADRID (ES); FOULQUIE ECHEVARRIA, Miguel, 28050 MADRID (ES); EGUIAGARAY GARCIA, Miguel, 28050 MADRID (ES); SEGARRA MARTINEZ, Miguel José, 28050 MADRID (ES); MARTIN DIAZ, Elena, 28050 MADRID (ES)
(74) Representative: Urizar Anasagasti, Jesus Maria
(86) International application number: PCT/ES2022/070502
(87) International publication number: WO 2024/023371

(57) **Abstract**

The present invention relates to a semi-submersible platform for supporting wind turbines comprising a mixed structure with two portions: a first concrete caisson-type structure (1), which serves as hydrodynamic stability and flotation of the platform, consisting of: a hollow, closed base plate (11), and cylindrical and/or frustoconical-shaped bodies (12), the bases of which are embedded in the base plate (11), in areas close to the vertices thereof, which are closed at the top by means of covers. And, a second structure formed by a transition piece (2) that connects the base plate (11) to the lower end of the tower (3) of the wind turbine at connection points (21), located on each side of the base plate (11), distributing the service loads of the wind turbine towards the concrete caisson-type structure (1).

## Description

### Technical field

The present invention falls within the field of floating structures serving as supports for offshore wind turbines. It therefore belongs to the fields of maritime construction and shipbuilding.

### State of the art

Within the field of offshore wind energy, a distinction can be made between fixed structures and floating structures. Among the former are those wind turbines that use deep metallic (monopiles) or semi-deep (jackets and tripods) foundations or gravity structures. Floating structures can be of various types, which can be broadly divided into the following basic subtypes:
1) Semi-submersible platform
2) SPAR (Single Point Anchor Reservoir) platform
3) TLP (Tension Leg Platform) platform
4) SWAY platform (hybrid between SPAR and TLP)

At its origins and traditionally, the field of offshore wind has been based on the technique developed for offshore platforms for gas or oil extraction. Over time, the offshore wind industry has developed its own requirements and typologies, adapting to the particularities of this renewable energy source.

The growing need to diversify energy sources and the high potential of offshore wind in open sea areas has led in recent years to a significant development of fixed solutions, located at medium or shallow depths. Recent advances in manufacturing and marine environments have made it possible to further increase the range of depths at which these fixed solutions are feasible, now even reaching areas around 60 m in depth. However, beyond these depths, it is necessary to resort to floating solutions anchored to the seabed, either by means of tensioned lines or in the form of a catenary, which keep the platforms in position by means of the weight of the chains that make them up, as well as the resistance provided by the horizontal sections of the chains resting on the seabed, and the anchors themselves.

Among the floating solutions, the number of solutions that use the semi-submersible platform typology has increased significantly in recent years. Within this subtype a distinction can be made between metal and concrete platforms. At present, there are still a very small number of semi-submersible platforms for offshore wind turbines in operation, almost all of which are metal structures, while concrete floating platform solutions are still under theoretical or conceptual development. Although they have some significant advantages, semi-submersible concrete platforms also have significant technical problems that may make them unfeasible from a practical point of view. From the construction point of view, concrete platforms are much heavier than metal platforms, which, although this may be an advantage during the service phase, imposes certain constraints on the construction processes when the manufacture of these structures takes place on land. In these cases, moving the platforms between the different manufacturing positions or the actual launching manoeuvre at sea (launching manoeuvre) are very complex and require special means. These constraints can be so limiting that they make it impossible, from a practical point of view, to manufacture these platforms or, at the very least, make them uncompetitive compared to metal platforms.

Another relevant problem, in this case from the structural point of view, of this type of concrete platform is the connection node between the tower of the wind turbine (metal) and the concrete platform itself, which acts as a float. The operating loads of the turbine result in enormous stresses at said connection node. These stresses are further increased due to the dynamic effects of the system, as the platform, not being rigidly attached to the seabed, is constantly moving with greater or lesser amplitude and acceleration, depending on the weather conditions and the operation of the turbine itself at any given time. These movements are continuous throughout the lifetime of the structure, which means that, in addition to the traditional failure modes associated with ultimate limit states and service and operational limit states, the failure modes associated with the fatigue limit state take on special relevance. Moreover, it has been found that in many cases it is these fatigue limit state checks that govern the design of the connection nodes between the tower and the platform, due to the high stresses that the concrete is continuously subjected to in this area. In the medium to long term, this can lead to tensile stresses in the concrete progressively leading to cracks that compromise structural performance and durability.

This problem is further aggravated by the fact that sizes (and therefore loads) of the turbines are nowadays becoming larger and larger. This trend is logical and is expected to continue for at least the next few years, as it is the main measure in terms of economy of scale that the sector can adopt to progressively reduce the cost of the electrical energy produced.

In this situation, current platforms have to be designed for turbines in the 12-15 MW range, a much more structurally demanding situation than the vast majority of floating platforms that currently exist at the conceptual level were originally designed for. In addition, projects with even larger turbines are already being considered, potentially increasing loads. In this situation, the two aforementioned problems (constructive and structural) are accentuated by this trend of increasing turbine capacity, size and loads. Thus, in order to adapt the hydrodynamic behaviour of the existing platforms to these new loads, it is necessary to increase their dimensions, which worsens the constructive limitations. Meanwhile, the structural behaviour of the connection nodes requires new typologies, as the simple extrapolation of existing solutions leads to new complications that are very difficult or impossible to implement.

From a structural design point of view, these are nodes that are usually made up of heavily reinforced concrete cores or walls and are also spanned by a set of prestressing cables and even post-tensioning bars or bolts rigidly connected to the concrete. This complexity and density of concrete reinforcement systems in relatively small volumes results in enormous reinforcement amounts that are difficult to implement. All this also leads to risks of incorrect execution, leaving parts in which accessibility of the freshly poured concrete is practically impossible, or without the possibility of carrying out adequate vibration to ensure that the junction is really executed according to what has been designed. In general, in trying to solve this problem, it is common to increase the thickness of the walls in order to be able to accommodate this multitude of elements. However, this approach may be unfeasible, as it increases the weight of the platform as a whole, being severely detrimental to the buoyancy of the platform as well as its hydrodynamic behaviour.

Furthermore, making the geometry and execution of the node compatible with the platform as a whole is also difficult. The connection of the tower to the platform may be located in areas requiring large crane reaches, which further complicates the construction process and the means required. Locating the node at the edges of the platform may favour the accessibility of the means during the construction phase in order to simplify the installation process of the tower but, nevertheless, it has the fundamental disadvantage that the platform is unbalanced in terms of its weight distribution, as the weight of the turbine and the tower must be added to that of the reinforced concrete node itself. This necessitates the need for additional ballast at the opposite end of the platform, which in turn alters the construction and operational draughts as well as the overall buoyancy conditions.

The above issue is new to the offshore wind sector for the following reasons:
- The problem does not apply to fixed metal solutions (monopiles or jackets), while in gravity solutions the magnitude of the problem is smaller, as the dynamic effects of floating platforms that significantly increase the stress states at the nodes do not occur.
- It also does not occur in metal floating platforms, as the fatigue failure modes of the connections between metal elements can be addressed by other design strategies with far fewer implications on the manufacturing processes.
- Finally, this is a recent problem, as turbine loads have been much lower to date.

As this is a very recent issue, there is little information available, as in most cases the impact of this increase in turbine size on the original designs is still being assessed. It can be concluded that the problems described above may compromise the constructive viability of concrete semi-submersible floating platforms in the future and, in any case, their competitiveness compared to metal solutions.

Floating metal (steel) platforms for the offshore wind industry have, among other, the disadvantage that they require special facilities (high-capacity factories or shipyards) and large onshore areas for their manufacture and assembly. Therefore, as they are manufactured on land, unique assembly manoeuvres are necessary, as well as the use of unique lifting means to launch these structures. Large dry docks are sometimes used to alleviate these problems. However, such installations of the required size are rare, such that in most cases it is not a viable option or, in any case, the cost of transport from the manufacturing plants to the offshore park increases significantly.

In addition, the use of steel makes the solution more expensive due to the higher price of steel compared to concrete. In addition, the price of steel fluctuates greatly, meaning that large investments of this type may be held back by the risk inherent in this fluctuation. Metal structures have long manufacturing lead times, which also have an impact on the total investment costs and the competitiveness of these solutions. Maintenance costs are higher due to the marine environment, and are much higher than in concrete solutions, because steel is a material susceptible to corrosion. All this can affect the profitability of offshore wind farms.

It is important to note that the hydrodynamic behaviour of semi-submersible platforms is totally dependent on the main constituent material, being dependent on their own weight. It is therefore not possible to simply adapt the designs of metal platforms for use on concrete platforms.

Concrete semi-submersible floating platforms for use in the offshore wind sector are briefly described below by way of references.

Documents ES2387232 and ES2387342 describe semi-submersible platforms for offshore applications, consisting of a central column and a plurality of outer columns (four or more in the first case, and three in the second), always joined by a plate in the lower area thereof. Both the columns and the plate are preferably made of reinforced concrete. The lower plate is reinforced by a plurality of beams connecting the base of each outer column with the base of the inner column and the base of each outer column with the base of each adjacent outer column. In addition, each column has a reinforcement section having greater strength at a certain intermediate height, as well as a set of beams joining at said height each outer column to the inner column and each outer column to each adjacent outer column. This semi-submersible platform further comprises a mooring system consisting of several mooring lines configured to be anchored to said section having greater strength of each outer column, located at an intermediate height of the same. Thus, this section having greater strength is essential as it is the most biased area of the structure and where the stresses are most concentrated.

The main problem with these platforms is that they have an extremely complex construction process, especially the intermediate reinforcement section in each of the columns. In addition, these platforms were designed for the case of a 5 MW turbine, where the weight of the wind turbine, tower and equipment amounts to about 945 tonnes.

WO2020136288 describes a floating platform for high-power, semi-submersible, square-ground plan wind turbines, consisting of five vertical cylinders and a base plate, as well as an upper metal structure connecting the crown of the cylinders to the base of the wind turbine tower. The five cylinders are of two types: four cylinders are located at the corners (one for each corner) while the fifth cylinder is located in the centre of the platform. The corner cylinders serve mainly to give the necessary buoyancy to the assembly as well as to receive the stresses transmitted by the tower of the wind turbine, which is why it is necessary for them to have a very significant diameter. The central cylinder is smaller in diameter, but because it is substantially less rigid than the outer cylinders, this central cylinder receives hardly any stresses from the tower, so its main function is to house the main electromechanical equipment as well as the routing of the cables inside the platform and the platform's active ballast equipment. The base plate connects all the cylinders at the lower portion thereof and there is a set of square hollow cross section beams that connect the perimeter cylinders to each other, as well as to the base of the central cylinder. The base plate provides little or no buoyancy in this case. The metal piece is made up of a set of elements that must be connected together so that, once fully assembled on the platform, it connects the upper portion of the five cylinders to the base of the tower of the wind turbine. This platform configuration is totally symmetrical, which favours the behaviour in the service phase but makes it difficult to install the metal tower due to its dimensions, which cover a large ground plan surface area.

In summary, existing semi-submersible floating platforms do not use the construction system of port caissons nor are they comparable to them, as is the case for example of some gravity solutions that have been developed as foundations for offshore wind turbines. Existing floating platform solutions, being conceived under a different construction philosophy, are not executable in floating docks or, even if they can be partially executable, they require different specific processes that are very relevant and are significantly detrimental to the manufacturing rate and cost. In addition, several of them contain a multitude of elements, considering a modular manufacturing and assembly that goes against the philosophy of execution with a small number of construction techniques and limited resources.

Furthermore, the vast majority of solutions lack a base plate which is beneficial in reducing the magnitude and effects of the heave motion of the platform. Except for the solution described in WO2020136288, no other solution has holes in the base plate in order to optimise the damping against heave motion and the connection node of the tower to the concrete structure that forms the float is implemented as a single point arranged in the centre of the structure. As this connection is implemented at a single point, it must withstand very high stresses, which, in turn, requires the configuration of a node with a very high concentration of concrete reinforcements (active reinforcement (bars or bolts plus post-tensioning cables) and passive reinforcement). This fact entails very important execution complexities that are very difficult to make compatible with the execution of the rest of the structure.

None of the described solutions can contain only three vertical cylinders as stabilising elements of the platform. Those having a triangular ground plan have a fourth central cylinder, which also serves to connect the tower of the wind turbine.

### Description of the invention

In order to solve the problem described in the preceding paragraphs and achieve the proposed objectives, the invention proposes a platform having the features of claim 1.

This semi-submersible platform comprises a mixed structure, with two portions:
- A first concrete caisson-type structure, which serves as hydrodynamic stability and flotation of the platform; and
- A second structure, consisting of a transition piece, which forms an element for distributing the service loads of the wind turbine to the aforementioned concrete caisson-type structure.

The first concrete caisson-type structure comprises:
- A base plate, with a triangular- or quadrangular-shaped ground plan and straight parallelepiped shape, formed from a lower bed, from which vertical perimeter walls and inner partition walls start. This base plate is enclosed by an upper slab, together forming a hollow, closed body entirely of reinforced concrete; and
- Cylindrical and/or frustoconical bodies, with a vertical axis, hollow, made of reinforced concrete, the bases of which are embedded in the base plate in areas close to its vertices, which are closed at the top by means of circular covers.

The second structure, which forms the transition piece, consists of an all-steel piece, which connects the base plate to the lower end of the tower of the wind turbine at connection points located on each side of the base plate.

In a preferred embodiment, the configuration of the base plate of the first concrete caisson-type structure has a ground plan according to an equilateral triangle with rounded edges.

In a preferred embodiment, the base plate of the first concrete caisson-type structure has a concentric inner recess with the same configuration as the base plate, which serves to lighten said base plate and also serves to optimise the hydrodynamic operation of the platform as a whole, improving the damping of the platform against the heave motion.

Among the disadvantages and limitations that are overcome with this invention, the following must be highlighted:
It is the first platform with only three cylinders, which nevertheless retains the three planes of symmetry without the need for a fourth central concrete cylinder. This means a significant reduction in weight and material volumes compared to other concrete solutions, while at the same time considerably lowering the centre of gravity of the assembly, which has a very positive effect on the naval stability of the platform.

The entire concrete structure can be built according to the same philosophy as the port caissons. In other words, in addition to being able to be manufactured on land, it can be built entirely in a floating dock and afloat. The execution of the entire lifting of the concrete structure can be carried out by sliding or climbing, using conventional concrete, in order to ensure the technical-economic feasibility of the concept in any location.

The horizontal post-tensioning is located entirely at the level of the bed and the cover slab of the base plate. Except for special cases with very high stresses, the need to position horizontal post-tensioning in the walls of the base plate is avoided, thus greatly facilitating its execution.

The design allows the prestressed concrete elements to be permanently submerged and in an area of the structure away from areas exposed to wave loads. All post-tensioning is carried out in a dry dock, and can therefore be carried out with the usual technical methods. This solution can therefore be considered perfectly viable and durable from a structural point of view.

The connection nodes are solved to ensure their easy execution and the application of the connection grout between the concrete of the caisson and the transition piece is avoided, as it has hexagonal crowns that act as a lost formwork that remains attached to the concrete. In all existing solutions, the application of grout is problematic, as it has to be carried out under very limiting conditions in terms of available space, being an essential element in the structural operation of the connections. In addition, due to the configurations of these nodes in these existing solutions, it is very difficult or impossible to check that the grout has correctly filled the entire space between the pieces and the concrete. This problem is critical and is completely solved by this new invention.

By using flat shapes at the connection nodes, the installation of the post-tensioning bolts or bars in the connection nodes, as well as the nuts, is facilitated as the distribution plates of the heads of the bolts are perfectly supported on the flat facings of both the hexagonal metal piece and the concrete walls.

The required draught during manufacture in port is limited to 10 metres, including the installation of the tower and the wind turbine in the port itself. This requirement is essential for the construction of such platforms in most of the world's ports. The need for land area for the manufacture of these platforms is also minimised, as it is possible to manufacture them in floating docks and complete them afloat.

The need for large lifting or transport means is avoided, as the entire platform can be manufactured in floating docks and afloat.

The base plate (heave plate) is designed to optimise the heave motions by optimising the damping of the platform and also provides additional flotation by being hollow and compartmentalised with cells, similarly to the port caissons.

The cylindrical and/or frustoconical bodies defined in the first concrete caisson-type structure reduce the wave loads on the platform to a minimum.

By having three axes of symmetry, the active ballast system required during the service of the wind turbine is simplified as much as possible, since at rest the platform is in equilibrium and not unbalanced.

As a result, a platform with an unballasted displacement of about 12,800 tonnes is achieved, which is smaller than the usual range of existing semi-submersible concrete platforms described above, which are designed for turbines up to 10 MW. Reducing the displacement (and thus the required volume of materials) to be applied to larger turbines is a major step forward in the state of the art. The significant increase in loads for 15 MW turbines compared to 10 MW turbines has to be taken into account.

The design of this platform represents a step forward with respect to previous proposals, as the feasibility of applying them to large capacity turbines (15 MW and even larger) is not solved by simply scaling the dimensions of the platforms, but requires a design that solves the problem addressed herein.

It also represents a step towards overcoming the technological barrier of making the solution of the fatigue behaviour of the nodes, the construction processes and the large-scale production of these platforms compatible with ever-increasing demands, while at the same time limiting the necessary draught in the manufacturing port and the surfaces required for the manufacture thereof, both on land and in water. This is critical given the limitations of current port infrastructures at the international level.

The platform can be industrially manufactured, optimising the different construction stages in sequential phases in a single dock of less than 250 metres, which is formed as a complete production line, allowing the production of a complete platform (tower and wind turbine included).

As a complement to the description provided herein, and for the purpose of helping to make the features of the invention more readily understandable, the present specification is accompanied by a set of drawings which, by way of illustration and not limitation, represent the following:

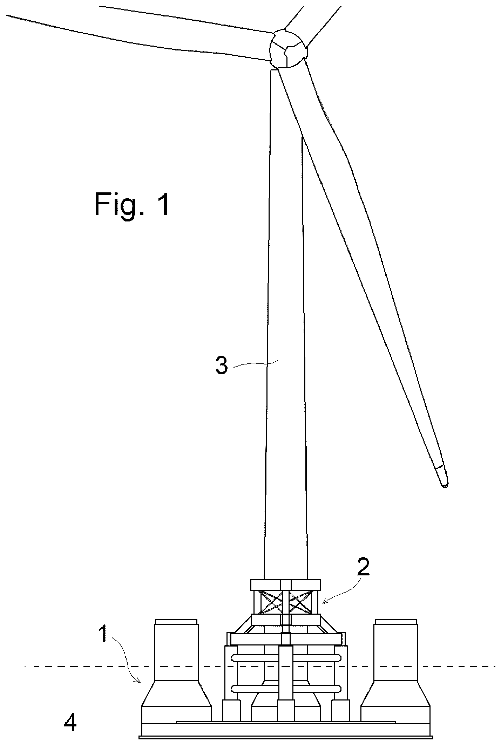

- Figure 1 shows a general view of a wind turbine the tower (3) of which is supported by the platform of the present invention, which is semi-submerged in the sea (4).

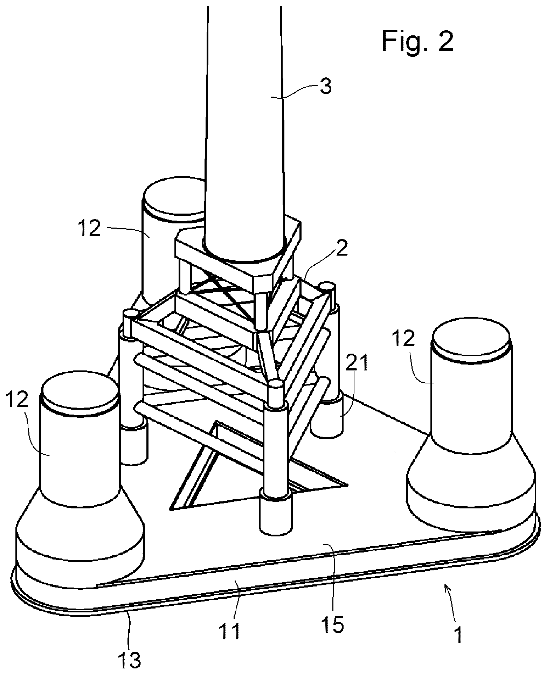

- Figure 2 depicts a perspective view of the platform of the invention.

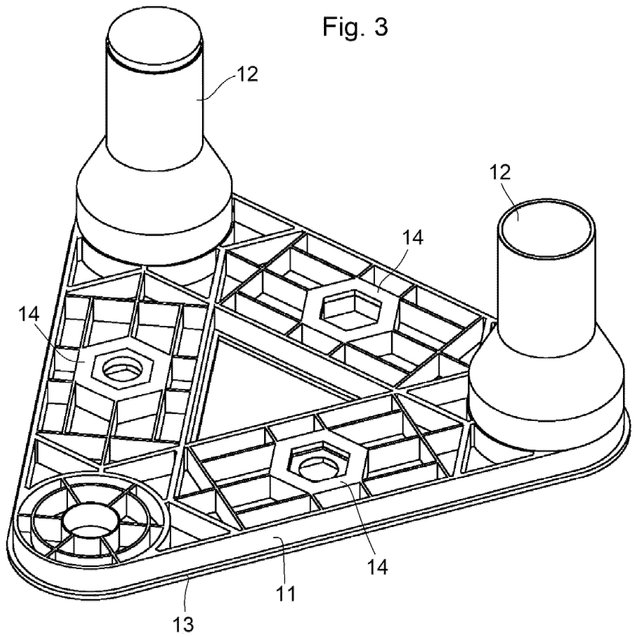

- Figure 3 is the same view as above of the platform under construction, in order to see its inner structure.

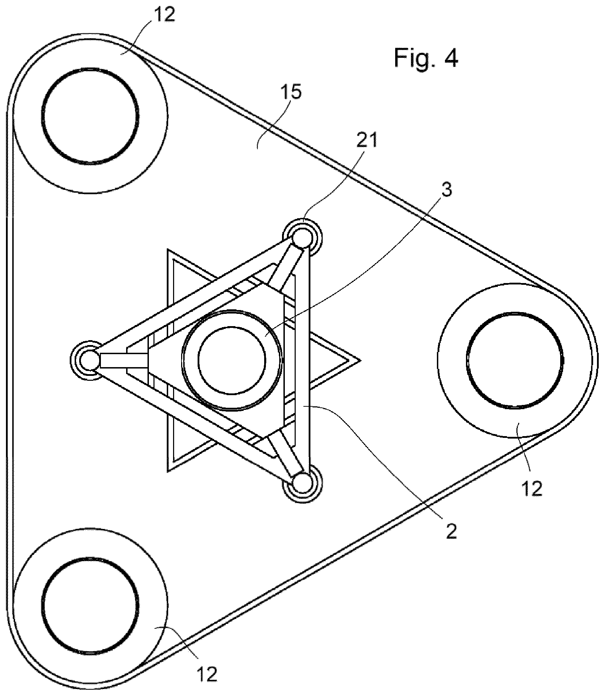

- Figure 4 depicts a plan view of said platform.
- Figure 5 represents an elevated cross-sectional view of one of the nodes (14) to which the transition structure (2) is attached.

### Detailed description of the embodiments

The invention consists of a semi-submersible offshore platform for supporting offshore wind turbines of 15 MW or more. Applicability to larger turbines would simply be based on the geometric scaling of its external dimensions, but would not require new structural elements or different construction methods.

In a preferred embodiment, the semi-submersible platform of the invention has an equilateral triangle-shaped ground plan and all its main structural elements have three axes of symmetry. The platform is made up of a mixed structure with two parts: a first concrete caisson-type structure (1) that provides the hydrodynamic stability and flotation function, and a second structure formed by a transition piece (2) as an element that distributes the service loads of the wind turbine towards the previous concrete structure (1). In the proposed configuration, both elements form part of a single system with its own characteristics and behaviour that cannot be achieved by using the two elements separately. Nor is it achievable by using any of these elements partially or adapted for other existing solutions.

The proposed configuration optimises the properties of the constituent materials of both elements and their functions within the structure. All dimensions given hereinafter are not intended to be exact but approximate. Different dimensions may be adopted as long as the proportions between them are kept approximate.

The reinforced concrete caisson-type structure comprises the following elements:
- A reinforced and post-tensioned concrete caisson (1), which in its conception and manufacturing process is a caisson-type structure based on the same philosophy as that used in port caissons.
   This caisson (1) consists of a hollow, closed base plate (heave plate) (11) and an upper slab (15). The base plate (11) is between 4 and 6 m high, with a triangular ground plan, with rounded vertices and a straight parallelepiped shape, made up of a lower bed (13), between 0.60 and 1.00 m thick, and vertical perimeter walls, between 0.50 and 0.60 m thick. The upper slab (15) is between 0.40 and 0.60 m thick. The inner volume of said plate is compartmentalised by straight reinforced concrete walls, between 0.25 m and 0.35 m thick. This base plate is in the shape of an equilateral triangle, the vertices of which are semicircles coinciding with the cylindrical bodies (12) located at said points. The triangle has a recess that is also triangular in the middle to lighten the base plate. This recess is essential to optimise the hydrodynamic performance of the platform as a whole, as it improves the damping of the platform against heave motion.
   The lower bed (13) of the base plate (11) extends outside the rest of the triangular parallelepiped body in the form of footings about 0.50-1.00 m wide, the edges thereof being parallel to the edges of the triangular parallelepiped.
- Three cylindrical and/or frustoconical bodies (12) with a vertical axis, hollow, made of reinforced concrete, the walls of which are between 0.35 m and 0.50 m thick, and the bases of which are in the base plate (11) and are embedded therein. At their start point, these bodies are cylindrical up to a certain height, which will normally be between 2 and 6 m above the crown of the base plate (11). From said height, these bodies have a transitional frustoconical shape, reducing the diameter of the straight section thereof. From a certain height, these bodies return to a straight cylindrical shape up to the crown thereof. The total height of these bodies thus defined ranges from 25 m to 32 m. At their crown, these bodies are closed at the top by means of circular metal covers that are anchored to the concrete cylinders.

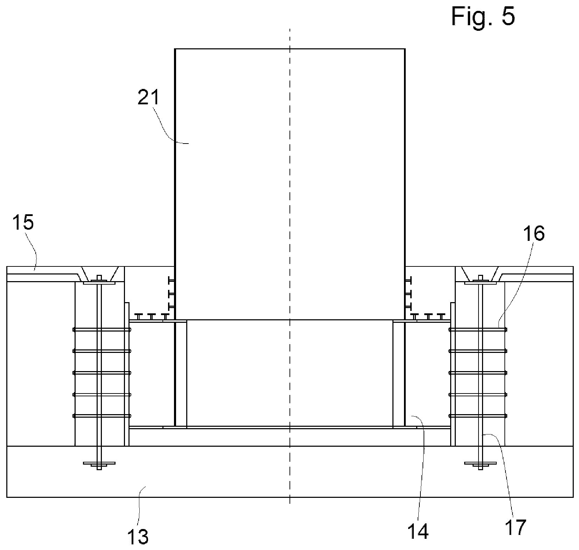

The constituent material of the caisson: base plate (11) and of the cylindrical and/or frustoconical-shaped bodies (12) is reinforced, prestressed and post-tensioned concrete. The post-tensioning elements are distributed and located in the following areas:
- Horizontal post-tensioning cables on the lower bed (13) of the base plate (11).
- Horizontal post-tensioning cables on the upper slab (15) of the base plate (11).
- Post-tensioning rods and cables (16, 17) at the three connection nodes (21) for connecting the transition piece (2) to the concrete caisson (1). See Figure 5.

The metal transition piece (2) consists of a steel piece, which connects the base plate (11) to the lower end of the tower of the wind turbine. The transition piece has three connection nodes (21) for connecting to the base plate (11), arranged in an equilateral triangle ground plan, the connection nodes (21) being at the centre of each side of the base plate.

The metal transition piece can be divided into four parts:
- Level 1: made up of support "feet" (3 units) that make the structural connections with the concrete base plate. Each of these feet consists of a cylindrical piece with a vertical axis and a diameter of about 4 m, with a hexagonal crown-shaped reinforcement at the base thereof. The hexagonal crown and the cylinder are connected by means of a horizontal plate covering the gap and welded to both. The cylinders are raised to a certain height (approximately 6.40 m above the lower hexagonal crown).
- Level 2: this is a piece formed by three parallel and vertical tubular profiles, with two levels of horizontal bracing, formed by tubular profiles welded thereto.
- Level 3: consisting of a piece that rests on top of each of the three previous tubular profiles. This piece is made up of cylindrical supports (one for each tubular profile of the previous lower piece), which are joined together by means of horizontal hollow rectangular profiles (metal box girder section). The cylindrical supports of this piece are joined to other hollow rectangular profiles (box girders) that end in another structure with a smaller triangular ground plan and chamfered at the vertices, which also forms part of this piece and is located at a higher level than the supports thereof.
- Level 4: which includes a final piece formed by three straight legs which are also hollow closed metal profiles (straight box-beam or tubular-type section), until it connects at the upper portion with another structure with a triangular ground plan and chamfered at the vertices, formed by a hollow box-beam type metal profile. The upper portion of this structure has a flange connection for connecting to the tower of the wind turbine.

Together, these parts, thus arranged and joined together by welding or by flanged joints, make up the transition piece (2) as a whole, which is made entirely of metal, namely steel. The connection of the upper flange of the piece to the base of the tower of the wind turbine is bolted with the same type of joint as is usually used in these cases.

The transition piece (2) can be configured differently, with a different number of partial parts. It may also have a slightly different shapes, such as a tripod, jacket (with shoring) or similar. In any case, it is intended that each of these pre-assembled individual pieces can be installed in position inside the platform by means of a crawler crane. The distribution in four parts is considered to be the most appropriate to optimise the use of the crane, as the weight of each of these pieces is less than 400 tonnes. Dividing it into fewer pieces would mean that the crane would have to handle higher loads (which would require special lifting means), and dividing it into more individual pieces would require more joints to be made between pieces, which would reduce performance.

But, in any case, it is a metal transition piece, which connects the base of the tower (3) of the wind turbine to the concrete caisson (1) formed by the base plate (11) and the cylinders (12) of the vertices. The joins between the metal part (2) and the concrete caisson (1) are integrated into the latter by way of post-tensioned nodes (14) inside the structure itself of the base plate (13).

The metal structure that allows the docking of maintenance boats and access of personnel by means of a ladder (boat landing) is attached to this transition piece (2), being joined by welding thereto. The intermediate and main platforms (Resting platform and Main platform or Deck) are also attached to the transition piece (2), of which they also form part.

All secondary structures (mainly operating platforms) are mounted directly on the transition piece (2), thus avoiding subsequent installation activities of these structures.

Figure 5 shows one of the connection nodes (21) between the metal transition piece (2) and the concrete caisson (2), which has been solved as follows: the transition piece has a reinforcement ring- or hexagonal crown-shaped ground plan on the lower portion thereof, which is welded to a cylindrical piece with a vertical axis. The hexagonal perimeter of the reinforcement ring is connected to the hexagonal concrete core (14) formed in the base plate (11) by means of post-tensioned bars (16) which pass horizontally through said hexagonal concrete core (vertical bolt cage). The horizontal post-tensioning bars (16) are equal and are distributed on different levels. The total number and capacity of the post-tensioning bars varies according to the stresses that this connection node has to withstand. The concrete walls of the core of said node also have a vertical post-tensioning (17), which can be either vertical post-tensioned bars or cables.

This platform includes a mooring system consisting of three pairs of catenaries made up of chains and cables. There are the anchors at the ends that are fixed to the seabed. The composition and length of the mooring lines will depend on the depth and specific conditions of the location where the floating platform is moored. At the other end, these anchor lines are connected to the base plate of the caisson at each of its three corners by fairleads, from which they are rerouted to the upper covers of the concrete cylinders, from where the lines are handled by means of winches.

Likewise, the platform of the invention incorporates an active ballast system, consisting of a set of pumps and pipes that run inside the base plate. The pumps are housed inside each of the cylinders. This system makes it possible to transfer water from one cylinder to another, if necessary, to stabilise the platform against the heeling that can occur during the service phase due to the operation of the wind turbine and the loads of waves, wind and currents.

This semi-submersible platform is conceived to be located at depths (draughts) of more than 60 m, and preferably between 90 and 150 m. For deeper depths, the proposed design may be valid, with the particular design of the mooring system to be adjusted.

The following describes possible variations that can be adopted from what is described in the preceding paragraphs, without these variations being interpreted as a change in the conceptual solution. As mentioned above, the above dimensions are for reference only and are not intended to be exact or to define precise ranges of application.

For example, the concrete to be used in the structure is conventional concrete, but alternatively low-density concrete can be used, thus reducing the resulting draught, or fibre-reinforced concrete can be used. The reinforcement of the concrete consists of conventional steel bars. Alternatively, resin-coated steel bars, metal fibre bars, plastic fibres, glass fibre reinforced polyester (GRP) bars, or any other non-corrosive system can be considered. Mainly at the connection nodes between the transition piece and the caisson, GRP bars can be used to ensure that they are not affected by corrosion although cracking may occur in these areas.

As for the outer geometry of the caisson and the transition piece, in addition to the triangular configurations of both the caisson and the transition piece, square configurations can be adopted for both elements. In this case, the caisson that forms the base plate or heave plate would have four cylindrical and frustoconical bodies, one at each vertex of the square. In this case, the transition piece would be connected to the concrete caisson at four nodes instead of three. Configurations with one axis of symmetry instead of three can also be adopted. Thus, isosceles triangle shapes could be adopted for the caisson, which would face the direction of incidence of the waves in the service phase, having its largest dimension in the same direction to counteract the instability produced by the waves. In this case, the transition piece could also be arranged with a single axis of symmetry in ground plan instead of three axes.

The location of the connection nodes, depending on the loads transmitted by the turbine (which depends mainly on its size and capacity), can be located inside the casing, in the base plate (11), or at a higher level, above the upper closing slab (15) of said base plate. In the latter case, the hexagonal prism formed by the concrete walls extends above the base plate (11), remaining hollow on the inside. The final elevation position of these connection nodes depends on the stresses they must withstand, which in turn depend on the site-specific wave, current and wind conditions, as well as the size of the turbine. Positioning the nodes at a higher elevation may be beneficial to reduce the stresses to be withstood but, on the contrary, it increases the complexity of the construction. In addition, placing the connection nodes at a higher elevation would leave them much more exposed to waves and currents, and in direct contact with seawater, whereas in the preferred configuration described above, the nodes are housed inside the caisson.

The configuration of the transition piece, in addition to the configuration described above, the transition piece may adopt a somewhat different configuration. The transition piece can be configured with a different number of partial parts. It may also have a slightly different shapes, such as a tripod, jacket (with shoring) or similar. It can also be configured with a different number of legs. Thus, for a regular triangular caisson, the transition piece could have 6 legs, with two legs located on each side of the triangle and similarly respecting the three axes of symmetry. In any case, it is intended that each of the individual parts that make up the transition piece as a whole can be installed in position on the platform by means of a crawler crane. The described distribution in four levels is considered to be the most appropriate to optimise the use of the crane, as the weight of each of these pieces is less than 400 tonnes. Dividing it into fewer pieces would mean that the crane would have to handle higher loads (which would require special lifting means), and dividing it into more individual pieces would require more joints to be made between pieces, which would reduce performance. In any case, it is a metal transition piece, which connects the base of the tower (3) of the wind turbine to the concrete caisson (1) that forms the base plate (heave plate), the connections with the latter being integrated in the form of post-tensioned nodes, housed inside the caisson itself.

The shape of the cylindrical and/or frustoconical bodies (12) of the caisson, which are the elements responsible for providing most of the flotation and stability of the platform, can also adopt cylindrical shapes that are constant in height, instead of the shape described herein with a frustoconical transition at a certain height. This transition is intended to change to a cylindrical section with a smaller diameter in the upper portion, so as to reduce the wave loads on this element, as well as to reduce the weight in the upper portion of the platform and lower the centre of gravity, which is also beneficial. In specific locations where wave loads are not very high, this transition could be omitted, resulting in cylinders with a constant cross-section over their entire height. If the cylindrical geometry is constant over the entire height thereof, these cylinders can be executed with sliding formwork. If a frustoconical transition is provided, it is executed with climbing formwork.

The covers of the cylindrical and/or frustoconical bodies (12) of the caisson may be made of metal or concrete. The choice between one type or the other depends on the amount of structural stresses transmitted by the mooring system to be withstood.

The connections to the mooring lines could be located on top of the cylindrical bodies but at other elevations instead of at the lower portion thereof. Likewise, it would be possible to dispense with mooring line re-routing.

The construction process of this platform is described below as it is an intrinsic aspect that determines the design of this solution.

As for the concrete caisson that forms the base plate (11) with its respective cylindrical and frustoconical-shaped bodies, the design has been chosen so that it can be manufactured following the same construction methods as the port caissons. Thus, it is possible to manufacture them in a floating dock by means of the sliding or climbing technique of the elements thereof, and their subsequent direct launching, as is done in the conventional way with these port caissons. And, in any case, it is also possible to manufacture this platform on land, although it is understood that in this case, part of the advantages of this design would be lost.

The construction process uses an industrialised production philosophy that reduces manufacturing rates to a minimum.

The design is also conceived to allow easy installation of the transition piece as well as the tower and all elements of the wind turbine within the manufacturing process at the manufacturing dock in port.

Only two successive manufacturing positions (Position No. 1 and Position No. 2) must be available in the same manufacturing dock, thus forming the industrial production line of these platforms. It is possible to have a third position (Position No. 3) in the dock; in this case, production would be increased but an additional crawler crane would be required to take advantage of said third position. This possibility may or may not be beneficial depending on the specific constraints of the project in question.

The manufacturing phases of a single platform are numbered considering that it is manufactured in a floating dock. It is also considered that only two manufacturing positions are used on the same dock (mooring line): No. 1 (where the floating dock is located) and No. 2 (where certain works are carried out to complete the construction):
Floating dock execution phases (Position No. 1):
1. Assembly of the passive and active reinforcement of the bed of the base plate. The three vertical post-tensioning bar cages of the nodes of the future connection with the metal transition piece are pre-installed attached to this reinforcement.
2. Assembly of side formwork of the bed of the base plate.
3. Complete concreting of the bed of the base plate.
4. Placement on the concrete bed of the three metal pieces that form the support feet of the transition piece (hexagonal crowns and first cylinders).
5. Installation of the sleeves of the future horizontal bolt coupled to the hexagonal crowns.
6. Installation of the reinforcement of the vertical walls of the base plate, including that of the connection nodes with the transition piece.
7. Installation of the formwork system of the wall.
8. Concreting of the vertical walls of the base plate over the entire height thereof. (The concreting of the corner cylinders starts at this stage and continues parallel to the rest of the activities and independently therefrom, until the cylinders are completed in their full height).
9. Removal of formwork from the vertical walls of the base plate.
10. Installation of the horizontal bolts inside the sleeves at the connection nodes.
11. Tensioning of the horizontal bolts and vertical bars at the connection nodes.
12. Placement of the slabs of the upper covers of the base plate.
13. Installation of the active and passive reinforcement of the upper cover of the base plate.
14. Concreting of the upper cover of the base plate.
15. Horizontal post-tensioning of the upper cover of the base plate.
16. Post-tensioning of the anchor nodes of the mooring lines.
17. Installation of the transition piece described above corresponding to Level 1.
18. Launching.

From this moment on, the rest of the activities are carried out with the platform afloat, freeing the floating dock for the execution of the next unit. (Position No. 2):
19. Installation of the transition piece described above corresponding to Level 2.
20. Installation of the transition piece described above corresponding to Level 3.
21. Installation of the transition piece described above corresponding to Level 4.
22. Completion of the execution of the concrete cylinders (which have continued in parallel since the previous step 8). Removal of formwork for reuse in the next unit.
23. Installation of electromechanical equipment that could not be pre-installed during the actual assembly of the transition piece.
24. Installation of the tower of the wind turbine.
25. Installation of the turbine (nacelle, rotor and blades).
26. Final tests.

The platform is now ready for transport to the final installation site in the offshore park.

The platform can thus be entirely built (including the assembly of the tower and the wind turbine) in a single manufacturing dock of about 220 m long, thus avoiding the need to occupy large areas of land or shipyards. As for the required draughts for such a dock, they range around 10 m.

Onshore manufacture would follow the same steps, with launching prior to the installation of the tower of the wind turbine and the turbine, which would be installed with the platform afloat and moored to the quay.

## Claims

1. A semi-submersible platform for a wind turbine support, comprising a mixed structure with two portions:
- a first concrete caisson-type structure (1), which serves as hydrodynamic stability and flotation of the platform, consisting of:
∘ a base plate (11), with a triangular- or quadrangular-shaped ground plan and straight parallelepiped shape, formed from a lower bed (13), with vertical perimeter walls and inner partition walls, and closed by an upper slab (15), forming a hollow and closed body, entirely of reinforced concrete; and
∘ cylindrical and/or frustoconical bodies (12), with a vertical axis, hollow, made of reinforced concrete, the bases of which are embedded in the base plate (11) in areas close to its vertices, which are closed at the top by means of circular covers;
- a second structure consisting of a transition piece (2) as an element that distributes the service loads of the wind turbine to the concrete caisson-type structure (1), consisting of an all-steel piece, which connects the base plate (11) to the lower end of the tower (3) of the wind turbine at connection points (21) located on each side of the base plate (11).

2. The platform according to claim 1, wherein the configuration of the base plate (11) of the first concrete caisson-type structure (1) has a ground plan according to an equilateral triangle with rounded edges.

3. The platform, according to any of the preceding claims, wherein the base plate (11) of the first concrete caisson-type structure (1) has a concentric inner recess with the same configuration as the base plate (11), which serves to lighten said base plate (11) and serves to optimise the hydrodynamic operation of the platform as a whole, improving the damping of the platform against the heave motion.

4. The platform, according to any of the preceding claims, wherein the connection points (21) between the metal transition piece (2) and the first concrete caisson-type structure (1) comprise a ring- or crown-shaped piece with a polygonal ground plan in the lower portion of the transition piece (2), which connects to a concrete core (14) formed in the base plate (11) by means of horizontal and vertical post-tensioned bars.

5. The platform according to any of the preceding claims, wherein the connection points (21) between the metal transition piece (2) and the first concrete caisson-type structure (1) are located in the centre of each side of the base plate (11).

6. The platform according to any one of claims 1 to 4, wherein the connection points (21) between the metal transition piece (2) and the first concrete caisson-type structure (1) are two on each side of the base plate (11).

7. The platform according to claim 4, wherein, depending on the loads transmitted by the turbine, the connection nodes between the metal transition piece (2) and the first concrete caisson-type structure (1) are housed in the base plate (11) or at a higher elevation, above the upper closing slab (15) of said base plate (11), in which case, the polygonal prism formed by the concrete walls extends above the base plate (11).

8. The platform, according to any of the preceding claims, wherein inside the base plate (11) and/or inside the cylindrical bodies (12) there is a set of pumps and pipes that allow water to be introduced into said cylinders (12) to moor the platform, or to transfer water from one to the other to stabilise the platform against the heeling that may occur during the service phase due to the operation of the wind turbine and the loads of waves, wind and currents.

9. The platform, according to any of the preceding claims, wherein the constituent material of the caisson: base plate (11) and of the cylindrical and/or frustoconical bodies (12) is reinforced, prestressed and post-tensioned concrete, wherein the post-tensioning elements are distributed and located in the following areas:
- the lower bed (13) of the base plate (11),
- the upper slab (15) of the base plate (11),
- at the connection nodes (14) for connecting the transition piece (2) to the concrete caisson (1).

10. The platform, according to any of the preceding claims, wherein the first concrete caisson-type structure (1) is made of reinforced concrete with fibres and/or resin-coated or glass fibre reinforced polyester (GRP) bars.
